# EUROPEAN PATENT APPLICATION

(11) **EP 4 723 321 A1**
(43) Date of publication of application: **08.04.2026**
(21) Application number: 24814503.9
(22) Date of filing: 29.05.2024
(51) Int. Cl.: H01M 50/152, H01M 50/627, H01M 50/682, H01M 10/0525, H01M 10/0587

(54) **LITHIUM-ION BATTERY**

(30) Priority: 29.05.2023 CN 202310623380; 29.05.2023 CN 202321333543 U; 29.05.2023 CN 202321333679 U; 29.05.2023 CN 202321339830 U
(71) Applicant: Gree Altairnano New Energy Inc., Zhuhai, Guangdong 519040 (CN)
(72) Inventor: JIANG, Shiyong, Zhuhai, Guangdong 519040 (CN); LI, Congli, Zhuhai, Guangdong 519040 (CN); XU, Delei, Zhuhai, Guangdong 519040 (CN); XIE, Dongbin, Zhuhai, Guangdong 519040 (CN); ZHAN, Shiying, Zhuhai, Guangdong 519040 (CN); JING, Dengwei, Zhuhai, Guangdong 519040 (CN); ZHANG, Xiongwen, Zhuhai, Guangdong 519040 (CN)
(74) Representative: Zacco GmbH
(86) International application number: PCT/CN2024/096159
(87) International publication number: WO 2024/245306

(57) **Abstract**

A lithium-ion battery is provided, and includes a case (100) having a first opening and a second opening arranged opposite each other; a battery cell (200) provided within the case (100), the battery cell (200) having a positive tab (210) located at the first opening and a negative tab (220) located at the second opening; a positive cover plate assembly (300) that is fitted over the first opening and is electrically connected to the positive tab (210), where the positive cover plate assembly (300) is provided with an electrolyte injection port (301), a first electrolyte channel (302), and a second electrolyte channel (303), the first electrolyte channel (302) is communicated with the electrolyte injection port (301) and an internal roll (230) of the battery cell (200), and the second electrolyte channel (303) is communicated with the first electrolyte channel (302) and a gap between an outer wall of the battery cell (200) and the case (100); and a negative cover plate assembly (400) that is fitted over the second opening and is electrically connected to the negative tab (220). Therefore, the present invention addresses technical problems of low energy density and difficulty in electrolyte injection in conventional lithium-ion batteries.

## Description

The present disclosure claims priority to Chinese Patent Application No. 202310623380.3, filed with the China National Intellectual Property Administration on May 29, 2023, and entitled "LITHIUM-ION BATTERY";
Chinese Patent Application No. 202321333543.6, filed with the China National Intellectual Property Administration on May 29, 2023, and entitled "POSITIVE ADAPTER STRUCTURE AND LITHIUM-ION BATTERY";
Chinese Patent Application No. 202321333679.7, filed with the China National Intellectual Property Administration on May 29, 2023, and entitled "ISOLATION AND POSITIONING STRUCTURE, POSITIVE COVER PLATE ASSEMBLY AND LITHIUM-ION BATTERY"; and
Chinese Patent Application No. 202321339830.8, filed with the China National Intellectual Property Administration on May 29, 2023, and entitled "NEGATIVE ADAPTER STRUCTURE AND LITHIUM-ION BATTERY".

### Technical Field

The present disclosure relates to the technical field of batteries, and more particularly, to a lithium-ion battery.

### Background

With the development of electronic technologies, lithium-ion batteries are being increasingly used in people's daily lives, showing a clear trend of replacing traditional batteries. Among them, cylindrical lithium-ion batteries are widely used in daily life due to their standardized production process, high production efficiency, excellent cycle performance, and good consistency.

In related technologies, to reduce production costs and improve battery portability, lithium-ion batteries are generally configured as small-sized cylindrical batteries. However, due to the small volume of the small-sized cylindrical batteries, the energy density of the battery is reduced; meanwhile, the limited dimensions of the small-sized cylindrical batteries result in a narrow internal space, making electrolyte injection difficult.

### Summary

The present disclosure provides a lithium-ion battery to address technical problems of low energy density and difficulty in electrolyte injection in conventional lithium-ion batteries.

To this end, the present disclosure provides a lithium-ion battery, and the lithium-ion battery includes:
a case having a first opening and a second opening arranged opposite each other;
a battery cell provided within the case, the battery cell having a positive tab located at the first opening and a negative tab located at the second opening;
a positive cover plate assembly that is fitted over the first opening and is electrically connected to the positive tab, wherein the positive cover plate assembly is provided with an electrolyte injection port, a first electrolyte channel, and a second electrolyte channel, the first electrolyte channel is communicated with the electrolyte injection port and an internal roll of the battery cell, and the second electrolyte channel is communicated with the first electrolyte channel and a gap between an outer wall of the battery cell and the case; and
a negative cover plate assembly that is fitted over the second opening and is electrically connected to the negative tab.

In one possible embodiment, the first electrolyte channel includes a first inlet and a plurality of first outlets, the first inlet is communicated with the electrolyte injection port, the first outlets are aligned with the internal roll of the battery cell, and projections of the plurality of first outlets in an axial direction of the battery cell are all located within a projection of the internal roll of the battery cell in the axial direction of the battery cell.

In one possible embodiment, the plurality of first outlets are distributed at intervals along a circumference of the battery cell; and/or the plurality of first outlets are distributed at intervals along a radial direction of the battery cell.

In one possible embodiment, the second electrolyte channel includes an annular channel and at least two strip-shaped channels, the annular channel is coaxially arranged with the battery cell, the annular channel is communicated with the first electrolyte channel, the strip-shaped channels are communicated with the annular channel and the gap between the outer wall of the battery cell and the case, the strip-shaped channels extend along a radial direction of the battery cell, and the at least two strip-shaped channels are arranged at intervals.

In one possible embodiment, the second electrolyte channel further includes an arc-shaped channel, the arc-shaped channel and the battery cell are coaxially arranged, the arc-shaped channel is arranged at intervals on an outer side of the annular channel, an outer side of the arc-shaped channel is communicated with the gap between the outer wall of the battery cell and the case, and both ends of the arc-shaped channel are communicated with the two adjacent strip-shaped channels respectively.

In one possible embodiment, the negative cover plate assembly is provided with a third electrolyte channel, and the internal roll of the battery cell and the gap between the outer wall of the battery cell and the case are communicated through the third electrolyte channel.

In one possible embodiment, the positive cover plate assembly includes a positive terminal, a positive adapter plate, and a positive cover plate, the positive terminal is electrically connected to the positive tab, the positive adapter plate and the positive cover plate are both sleeved on the positive terminal, the positive cover plate is provided on a side of the positive adapter plate away from the positive tab, and the positive adapter plate is connected to the positive tab.

In one possible embodiment, the positive cover plate assembly further includes a positive terminal sleeve and a sealing structure, the positive terminal sleeve and the sealing structure are both provided between the positive cover plate and the positive terminal, and the sealing structure is arranged facing the battery cell; and/or
the positive cover plate assembly further includes an isolation and positioning structure, the isolation and positioning structure is sleeved on the positive terminal, and the isolation and positioning structure is located between the positive adapter plate and the positive cover plate.

In one possible embodiment, the negative cover plate assembly includes a negative terminal, a negative adapter plate, and a negative cover plate, the negative terminal is electrically connected to the negative tab, the negative adapter plate and the negative cover plate are both sleeved on the negative terminal, the negative cover plate is provided on a side of the negative adapter plate away from the negative tab, and the negative adapter plate is connected to the negative tab.

In one possible embodiment, the battery cell includes a central tube provided in the internal roll of the battery cell, the central tube includes a hollow tube body and ball heads embedded at both ends of the tube body, the ball heads are provided with heat dissipation holes, and the heat dissipation holes are communicated with an internal space of the case and an internal space of the tube body.

The lithium-ion battery provided according to the present disclosure includes a case having a first opening and a second opening arranged opposite each other; a battery cell provided within the case, the battery cell having a positive tab located at the first opening and a negative tab located at the second opening; a positive cover plate assembly that is fitted over the first opening and is electrically connected to the positive tab, where the positive cover plate assembly is provided with an electrolyte injection port, a first electrolyte channel, and a second electrolyte channel, the first electrolyte channel is communicated with the electrolyte injection port and an internal roll of the battery cell, and the second electrolyte channel is communicated with the first electrolyte channel and a gap between an outer wall of the battery cell and the case; and a negative cover plate assembly that is fitted over the second opening and is electrically connected to the negative tab. In the technical solution of the present disclosure, the specific structure of the lithium-ion battery is optimized to overcome the volume limitations of small-sized cylindrical batteries, thereby increasing the energy density of the lithium-ion battery and enhancing the charge-discharge efficiency of the battery. In addition, the problem of difficulty in electrolyte injection for small-sized batteries is addressed, improving the electrolyte injection efficiency and production efficiency of small-sized batteries. Specifically, the lithium-ion battery is configured as a combination assembly including at least the case, the battery cell, the positive cover plate assembly, and the negative cover plate assembly. The positive cover plate assembly and the negative cover plate assembly are respectively fitted over the first opening and second opening of the case, and enclose together with the case to form an accommodating space for accommodating the battery cell; and the battery cell is assembled in the accommodating space. Furthermore, the positive cover plate assembly is provided with an electrolyte injection port through which the electrolyte is injected into the accommodating space. In addition, the positive cover plate assembly is provided with a first electrolyte channel and a second electrolyte channel, so that the injected electrolyte is guided into the internal roll of the battery cell through the first electrolyte channel to wet positive and negative electrode rolls of the battery cell, thereby enabling ion conduction between the positive and negative electrode rolls via the electrolyte. When there is excessive electrolyte between the positive and negative electrode rolls of the battery cell, the excessive injected electrolyte can also be guided into a space between the case and the battery cell through the second electrolyte channel for storage, thereby alleviating the problem of difficult subsequent electrolyte injection caused by filling the excessive electrolyte between the positive and negative electrode rolls and an excessive pressure between the internal rolls. When the electrolyte between the positive and negative electrode rolls is excessively consumed and the internal rolls gradually dry out, the stored electrolyte sequentially passes through the second electrolyte channel and the first electrolyte channel under the suction force of the internal rolls, entering and wetting the positive and negative electrode rolls. In this way, by providing multiple electrolyte channels on the positive cover plate assembly, direct utilization (guiding the electrolyte into the internal roll of the battery cell) and storage utilization (guiding the electrolyte into the gap between the case and the battery cell) of the injected electrolyte are achieved, effectively improving the internal energy density and power density of small lithium-ion batteries, and enhancing the safety of lithium-ion battery usage.

### Brief Description of the Drawings

To more clearly explain embodiments of the present disclosure or the technical solution in the prior art, the accompanying drawings needed in the descriptions of the embodiments or the prior art will be briefly introduced below. Apparently, other accompanying drawings also may be obtained by ordinary persons skilled in the art based on these drawings without any creative labor. In addition, in the drawings, the same reference numerals denote the same components, and the drawings are not drawn to actual scale.
FIG. 1 is a sectional view of a lithium-ion battery provided in an embodiment of the present disclosure;
FIG. 2 is a partial schematic diagram of a positive cover plate assembly provided in an embodiment of the present disclosure;
FIG. 3 is a projection view of a first electrolyte channel in an axial direction of a battery cell provided in the present disclosure;
FIG. 4 is another projection view of a first electrolyte channel in an axial direction of a battery cell provided in the present disclosure;
FIG. 5 is a schematic structural diagram of a second electrolyte channel provided in the present disclosure;
FIG. 6 is a partial schematic diagram of a negative cover plate assembly provided in an embodiment of the present disclosure;
FIG. 7 is a perspective structural schematic diagram of a battery cell provided in an embodiment of the present disclosure;
FIG. 8 is a perspective structural schematic diagram of a central tube provided in the present disclosure;
FIG. 9 is a perspective structural schematic diagram of a positive adapter plate from a viewing angle provided in the present disclosure;
FIG. 10 is a perspective structural schematic diagram of a positive adapter plate from another viewing angle provided in the present disclosure;
FIG. 11 is a perspective structural schematic diagram of an isolation and positioning structure from a viewing angle provided in the present disclosure;
FIG. 12 is a perspective structural schematic diagram of an isolation and positioning structure from another viewing angle provided in the present disclosure; and
FIG. 13 is a perspective structural schematic diagram of a negative adapter plate provided in the present disclosure.

### Description of reference numerals:

100, case;
200, battery cell; 210, positive tab; 220, negative tab; 230, internal roll; 240, central tube; 241, tube body; 242, ball head; 2421, heat dissipation hole;
300, positive cover plate assembly; 301, electrolyte injection port; 302, first electrolyte channel; 3021, first inlet; 3022, first outlet; 303, second electrolyte channel; 3031, annular channel; 3032, strip-shaped channel; 3033, arc-shaped channel; 310, positive terminal; 320, positive adapter plate; 330, positive cover plate; 340, positive terminal sleeve; 350, sealing structure; 360, isolation and positioning structure;
400, negative cover plate assembly; 401, third electrolyte channel; 410, negative terminal; 420, negative adapter plate; 430, negative cover plate;
51, adapter plate body; 52, first connecting hole; 53, blind hole; 54, through hole; 55, first flow channel; 56, second flow channel; 57, first flange;
61, annular channel portion; 62, first connecting hole; 63, strip-shaped channel portion; 64, first connecting portion; 641, first notch; 642, second notch; 65, second connecting portion; 66, first connecting boss; 67, groove; 68, second connecting boss;
71, first surface; 72, second surface; 73, third connecting hole; 74, second avoidance hole; 75, first groove; 76, second groove; 781, first boss; 782, second boss;
X, radial direction of battery cell; Y, axial direction of battery cell.

### Detailed Description of the Embodiments

To make the objectives, technical solutions, and advantages of the embodiments of the present disclosure clearer, the following clearly and completely describes the technical solutions in the embodiments of the present disclosure with reference to the accompanying drawings in the embodiments of the present disclosure. Apparently, the described embodiments are some but not all embodiments of the present disclosure. All other embodiments, obtained by those skilled in the art based on the embodiments of the present disclosure without any creative labor, fall within the scope of protection of the present disclosure.

For ease of understanding, in the priority document with application number 202321333543.6 and entitled "Positive Adapter Structure and Lithium-ion Battery", a "positive adapter structure" is changed to a "positive adapter plate".

In the priority document with application number 202310623380.3 and entitled "Lithium-ion Battery", a "first groove" is changed to a "first flow channel", a "second groove" is changed to a "second flow channel", an "annular connecting portion" is changed to a "first connecting portion", a "groove structure" is changed to a "groove", a "third protruding connecting hole" is changed to a "third connecting hole", a "third groove" is changed to a "first groove", and a "fourth groove" is changed to a "second groove".

In the priority document with application number 202321339830.8 and entitled "Negative Adapter Structure and Lithium-ion Battery", a "first connecting boss" is changed to a "first boss", a "second connecting boss" is changed to a "second boss", a "connector" is changed to a "negative terminal", a "connecting hole" is changed to a "third connecting hole", and an "avoidance hole" is changed to a "second avoidance hole".

In the priority document with application number 202321333679.7 and entitled "Isolation and Positioning Structure, Positive Cover Plate Assembly and Lithium-ion Battery", a "positive adapter structure" is changed to a "positive adapter plate".

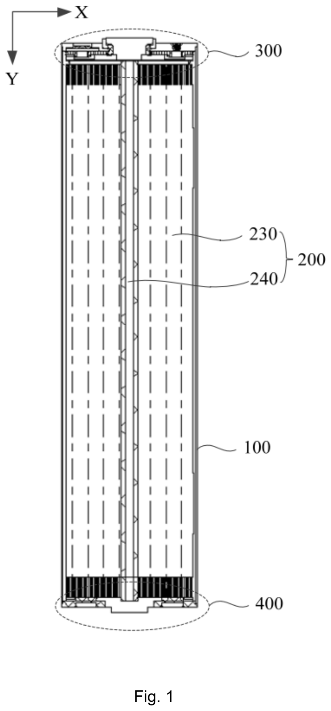

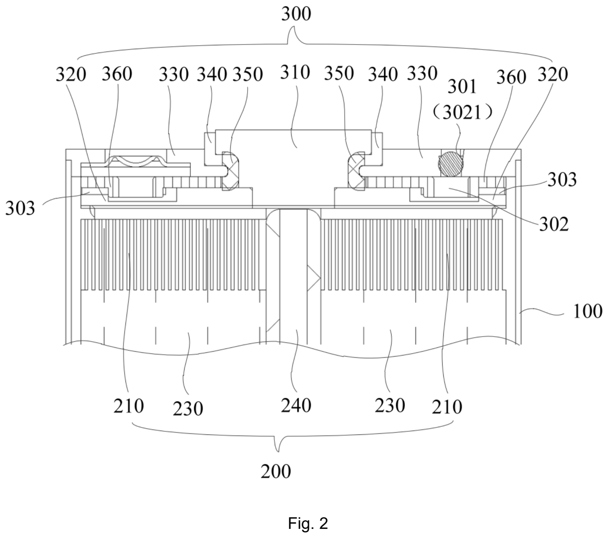

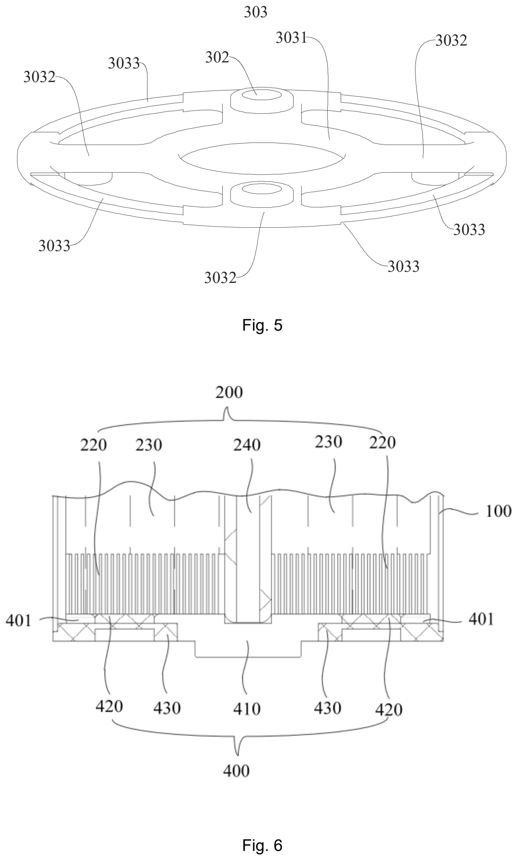

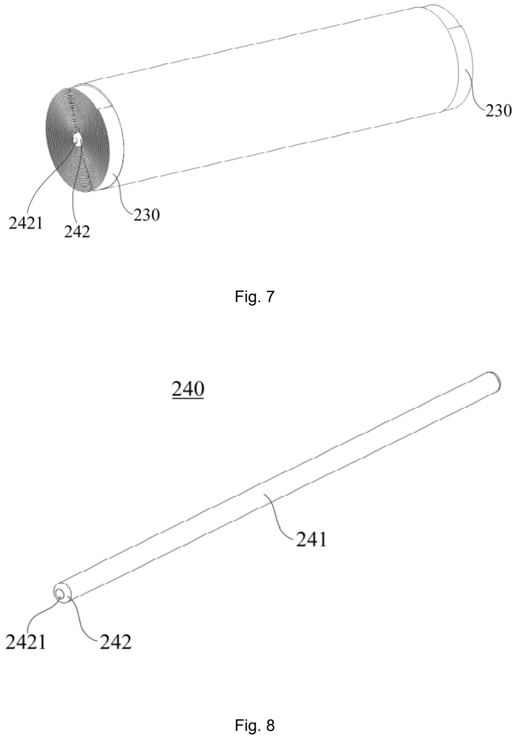

Referring to FIG. 1 to FIG. 8, an embodiment of the present disclosure provides a lithium-ion battery, and the lithium-ion battery includes: a case 100, a battery cell 200, a positive cover plate assembly 300, and a negative cover plate assembly 400.

The case 100 has a first opening and a second opening arranged opposite each other.

The battery cell 200 is provided within the case 100, and the battery cell 200 has a positive tab 210 located at the first opening and a negative tab 220 located at the second opening.

The positive cover plate assembly 300 is fitted over the first opening and is electrically connected to the positive tab 210, where the positive cover plate assembly 300 is provided with an electrolyte injection port 301, a first electrolyte channel 302, and a second electrolyte channel 303, the electrolyte injection port 301 and an internal roll 230 of the battery cell 200 are communicated through the first electrolyte channel 302, and the first electrolyte channel 302 and a gap between an outer wall of the battery cell 200 and the case 100 are communicated through the second electrolyte channel 303; and
the negative cover plate assembly 400 is fitted over the second opening and is electrically connected to the negative tab 220.

In this embodiment, the specific structure of the lithium-ion battery is optimized to overcome the volume limitations of small-sized cylindrical batteries, thereby increasing the energy density of the lithium-ion battery and enhancing the charge-discharge efficiency of the battery. In addition, the problem of difficulty in electrolyte injection for small-sized batteries is addressed, improving the electrolyte injection efficiency and production efficiency of small-sized batteries.

Specifically, the lithium-ion battery is configured as a combination assembly including at least the case 100, the battery cell 200, the positive cover plate assembly 300, and the negative cover plate assembly 400. The positive cover plate assembly 300 and the negative cover plate assembly 400 are respectively mounted over the first opening and second opening of the case 100, and enclose together with the case 100 to form an accommodating space for accommodating the battery cell 200; and the battery cell 200 is assembled in the accommodating space. Furthermore, the positive cover plate assembly 300 is provided with an electrolyte injection port 301 through which the electrolyte is injected into the accommodating space. In addition, the positive cover plate assembly 300 is provided with a first electrolyte channel 302 and a second electrolyte channel 303, so that the injected electrolyte is guided into the internal roll 230 of the battery cell 200 through the first electrolyte channel 302 to wet positive and negative electrode rolls of the battery cell 200, thereby enabling ion conduction between the positive and negative electrode rolls via the electrolyte. When there is excessive electrolyte between the positive and negative electrode rolls of the battery cell 200, the excessive injected electrolyte can also be guided into a space between the case 100 and the battery cell 200 through the second electrolyte channel 303 for storage, thereby alleviating the problem of difficult subsequent electrolyte injection caused by filling the excessive electrolyte between the positive and negative electrode rolls and an excessive pressure between the internal rolls 230. When the electrolyte between the positive and negative electrode rolls is excessively consumed and the internal rolls 230 gradually dry out, the stored electrolyte sequentially passes through the second electrolyte channel 303 and the first electrolyte channel 302 under the suction force of the internal rolls 230, entering and wetting the positive and negative electrode rolls. Thus, the positive cover plate assembly 300 is provided with multiple electrolyte channels, so that the injected electrolyte is directly utilized (the electrolyte is guided into the internal roll 230 of the battery cell 200) and stored (the electrolyte is guided into the gap between the case 100 and the battery cell 200), effectively increasing the energy density and power density of the small-sized lithium-ion battery and enhancing the use safety of the lithium-ion battery.

In an embodiment, the case 100 is a cylindrical structure with openings at both ends, the battery cell 200 is accommodated in a hollow portion of the cylindrical structure, and the positive cover plate assembly 300 and the negative cover plate assembly 400 are respectively provided at both ends of the cylindrical structure to provide rigid protection for the battery cell 200 and to provide a safe and sealed environment for the battery cell 200.

In an embodiment, the first electrolyte channel 302 includes a first inlet 3021 and a plurality of first outlets 3022. The first inlet 3021 is communicated with the electrolyte injection port 301, the first outlets 3022 are aligned with the internal roll 230 of the battery cell 200, and projections of the plurality of first outlets 3022 in an axial direction Y of the battery cell 200 are all located within a projection of the internal roll 230 of the battery cell 200 in the axial direction Y of the battery cell 200.

In this embodiment, the specific configuration of the first electrolyte channel 302 is optimized. Specifically, the first electrolyte channel 302 is configured as a composite structure having a first inlet 3021 and a plurality of first outlets 3022. The first inlet 3021 is configured to communicate with the electrolyte injection port 301, and the plurality of first outlets 3022 are configured to communicate with the internal roll 230 of the battery cell 200. Thus, the external electrolyte is guided into the internal roll 230 of the battery cell 200, enabling ion conduction between the internal roll 230 and the charge and discharge of the battery. The first inlet 3021 is arranged facing away from the battery cell 200, and the first outlets 3022 are arranged facing the case 100.

On one hand, the plurality of first outlets 3022 are configured, so that the electrolyte within the first electrolyte channel 302 is shunted, effectively alleviating the accumulation and blockage of the electrolyte within the first electrolyte channel 302, and improving the smoothness and efficiency of electrolyte injection. On the other hand, the plurality of first outlets 3022 are arranged at intervals and aligned with different positions of the internal roll 230, so that the electrolyte is injected into and wets different positions of the internal roll 230 of the battery cell 200 through the plurality of first outlets 3022, improving the uniformity of electrolyte injection into the internal roll 230, and ensuring that the electrolyte is evenly distributed within the internal roll 230. This is conducive to enhancing the stability and safety of the charge and discharge of the battery.

In a possible embodiment, the plurality of first outlets 3022 are distributed at intervals along the circumference of the battery cell 200.

In this embodiment, the specific configuration of the first electrolyte channel 302 is further optimized to enhance the electrolyte injection efficiency. Specifically, the plurality of first outlets 3022 are arranged at intervals along the circumference of the battery cell 200. In addition, projections of the plurality of first outlets 3022 in the axial direction Y of the battery cell 200 are circular. Since the electrolyte is injected along the circumferential direction of the internal roll 230, very little or almost no electrolyte flows along a roll direction of the internal roll 230. Most of the electrolyte flows directly along an axial direction of the internal roll 230, thus shortening the flow path of the electrolyte and effectively improving the injection efficiency and stability of the battery.

In a possible embodiment, the plurality of first outlets 3022 are distributed at intervals along a radial direction X of the battery cell 200.

In this embodiment, the specific configuration of the first electrolyte channel 302 is further optimized to enhance the electrolyte injection efficiency. Specifically, the plurality of first outlets 3022 are arranged at intervals along the radial direction X of the battery cell 200. In addition, the projections of the plurality of first outlets 3022 in the axial direction Y of the battery cell 200 are linear. Since the electrolyte is injected along at least one diameter direction of the internal roll 230, part of the electrolyte flows along the roll direction of the internal roll 230 to wet the internal roll 230 into which no electrolyte has been injected, while the other part of the electrolyte flows along the axial direction Y of the internal roll 230. Thus, the simple arrangement of the plurality of first outlets 3022 effectively reduces the processing difficulty.

In an embodiment, the plurality of first outlets 3022 may also be arranged along both the circumferential direction and radial direction X of the battery cell 200. In addition, the projections of the plurality of first outlets 3022 along the axial direction Y of the battery cell 200 are of a multilayer concentric circle structure.

In one possible embodiment, the second electrolyte channel 303 includes an annular channel 3031 and at least two strip-shaped channels 3032, the annular channel 3031 and the battery cell 200 are coaxially arranged, the annular channel 3031 is communicated with the first electrolyte channel 302, the strip-shaped channels 3032 are communicated with the annular channel 3031 and the gap between the outer wall of the battery cell 200 and the case 100, the strip-shaped channels 3032 extend along a radial direction X of the battery cell 200, and the at least two strip-shaped channels 3032 are arranged at intervals.

In this embodiment, the specific configuration of the second electrolyte channel 303 is optimized. Specifically, the second electrolyte channel 303 is configured as a combination assembly including at least the annular channel 3031 and at least two of the strip-shaped channels 3032. The annular channel 3031 is arranged inside the strip-shaped channels 3032 and is communicated with the first electrolyte channel 302. The strip-shaped channels 3032 extend along the radial direction X of the battery cell 200 to be communicated with the annular channel 3031 and the gap between the battery cell 200 and the case 100. Thus, when there is excessive electrolyte in the first electrolyte channel 302, the electrolyte is sequentially guided into the gap between the battery cell 200 and the case 100 through the annular channel 3031 and the strip-shaped channels 3032 for storage. When the electrolyte in the internal roll 230 is excessively consumed and the internal roll 230 becomes dry, the stored electrolyte is sequentially drawn into the internal roll 230 of the positive electrode through the strip-shaped channels 3032, the annular channel 3031, the first electrolyte channel 302, and the first outlets 3022, achieving wetting and ion conduction of the positive internal rolls 230 of the positive electrode.

In one example, four strip-shaped channels 3032 are respectively arranged at four orientations of the annular channel 3031, and extension lines of the four strip-shaped channels 3032 form a cross-shaped structure.

In one example, the annular channel 3031 is provided with one second inlet and at least two annular outlets, and the strip-shaped channel 3032 is provided with one strip-shaped inlet and one second outlet. The second inlet is communicated with the first electrolyte channel 302, the strip-shaped inlet is communicated with the annular outlet, and the second outlet is aligned with the gap between the battery cell 200 and the case 100. The second inlet is arranged facing the first electrolyte channel 302, and the second outlet is arranged facing the case 100.

In one possible embodiment, the second electrolyte channel 303 further includes an arc-shaped channel 3033, the arc-shaped channel 3033 and the battery cell 200 are coaxially arranged, the arc-shaped channel 3033 is arranged at intervals an outer side of the annular channel 3031, the outer side of the arc-shaped channel 3033 is communicated with the gap between the outer wall of the battery cell 200 and the case 100, and both ends of the arc-shaped channel 3033 are communicated with the two adjacent strip-shaped channels 3032 respectively.

In this embodiment, the specific configuration of the second electrolyte channel 303 is further optimized. Specifically, the second electrolyte channel 303 is configured as a combination assembly including at least the annular channel 3031, at least two of the strip-shaped channels 3032, and the arc-shaped channels 3033. The arc-shaped channel 3033 is provided on a side of each strip-shaped channel 3032 away from the annular channel 3031, the outer side of the arc-shaped channel 3033 is communicated with the gap between the battery cell 200 and the case 100, and both ends of the arc-shaped channel 3033 are respectively communicated with the two adjacent strip-shaped channels 3032. Thus, the arc-shaped channel 3033 increases the contact area between the second electrolyte channel 303 and the stored electrolyte, facilitating drawing the stored electrolyte into the second electrolyte channel 303.

It should be noted that the first electrolyte channel 302 is sequentially communicated with the gap between the battery cell 200 and the case 100 through the annular channel 3031, the strip-shaped channels 3032, and the arc-shaped channel 3033.

In one possible embodiment, the negative cover plate assembly 400 is provided with a third electrolyte channel 401, and the third electrolyte channel 401 is communicated with the internal roll 230 of the battery cell 200 and the gap between the outer wall of the battery cell 200 and the case 100.

In this embodiment, the electrolyte flow on the negative cover plate assembly 400 is optimized. Specifically, to further improve the electrolyte flow effect, the third electrolyte channel 401 is provided on the negative cover plate assembly 400. The third electrolyte channel 401 is communicated with the internal roll 230 and the gap between the outer wall of the battery cell 200 and the case 100, so that when the electrolyte in the internal roll 230 is excessively consumed and the internal roll 230 becomes dry, the electrolyte is drawn into the negative internal roll 230 through the third electrolyte channel 401, achieving wetting and ion conduction of the negative internal rolls 230.

In one example, the third electrolyte channel 401 has a plurality of third inlets and a plurality of third outlets, the third inlets are communicated with the gap between the battery cell 200 and the case 100, and the third outlets are aligned with the negative internal roll 230. The third inlets are arranged facing the case 100, and the third outlets are arranged facing the negative internal roll 230.

In one possible embodiment, the positive cover plate assembly 300 includes a positive terminal 310, a positive adapter plate 320, and a positive cover plate 330, the positive terminal 310 is electrically connected to the positive tab 210, the positive adapter plate 320 and the positive cover plate 330 are both sleeved on the positive terminal 310, the positive cover plate 330 is provided on a side of the positive adapter plate 320 away from the positive tab 210, and the positive adapter plate 320 is connected to the positive tab 210.

In this embodiment, the specific configuration of the positive cover plate assembly 300 is optimized. Specifically, the positive cover plate assembly 300 is configured as a combination assembly including at least the positive terminal 310, the positive adapter plate 320, and the positive cover plate 330. The positive terminal 310 conducts electricity to the positive tab 210 of the battery cell 200, the positive adapter plate 320 is sleeved on the positive terminal 310 and connected to the positive tab 210, the positive cover plate 330 is sleeved on the positive terminal 310 and connected to a side of the positive adapter plate 320 away from the positive tab 210, and is connected to the first opening of the case 100. Thus, part of the positive terminal 310 and the entire positive adapter plate 320 are sealed in the case 100.

In one example, the positive terminal 310 includes a first cylinder, a second cylinder, and a third cylinder that are coaxially arranged, a diameter of the first cylinder is greater than a diameter of the second cylinder, and the diameter of the second cylinder is greater than a diameter of the third cylinder. The third cylinder is connected to the positive tab 210, the positive adapter plate 320 is sleeved on the third cylinder, and the positive cover plate 330 is sleeved on the first cylinder. A side of the positive adapter plate 320 away from the positive cover plate 330 is flush with a side of the third cylinder away from the first cylinder, and the positive adapter plate 320 is laser welded to the positive terminal 310.

In one example, the first inlet 3021 is provided on the positive cover plate 330, the first outlet 3022 is provided on the positive adapter plate 320, and the first electrolyte channel 302 is provided between the positive cover plate 330 and the positive adapter plate 320.

In one possible embodiment, the positive cover plate assembly 300 further includes a positive terminal sleeve 340 and a sealing structure 350, the positive terminal sleeve 340 and the sealing structure 350 are both provided between the positive cover plate 330 and the positive terminal 310, and the sealing structure 350 is arranged facing the battery cell 200.

In this embodiment, the specific configuration of the positive cover plate assembly 300 is further optimized. Specifically, the positive cover plate assembly 300 is configured as a combination assembly including at least the positive terminal 310, the positive adapter plate 320, the positive cover plate 330, the positive terminal sleeve 340, and the sealing structure 350. The positive terminal sleeve 340 is sleeved between the positive cover plate 330 and the positive terminal 310 to insulate the positive terminal 310 from the positive cover plate 330. The sealing structure 350 is sleeved between the positive cover plate 330 and the positive terminal 310 to enhance the sealing performance of the positive cover plate assembly 300. For example, but not limited to, the sealing structure 350 is a sealing ring.

In one example, the material of the positive terminal sleeve 340 is PPS (polyphenylene sulfide), and the material of the sealing structure 350 is PFA (polytetrafluoroethylene).

In one example, a side of the positive terminal sleeve 340 facing the battery cell 200 is sleeved outside a side of the sealing structure 350 away from the battery cell 200, thereby enhancing the sealing performance between the positive terminal sleeve 340 and the positive terminal 310. Of course, in other embodiments, the positive terminal sleeve 340 and the sealing structure 350 may also be integrally formed.

In one example, the positive terminal 310 includes a first cylinder, a second cylinder, and a third cylinder that are coaxially arranged. The positive terminal sleeve 340 is sleeved on an outer side of the first cylinder, and the sealing structure 350 is sleeved on an outer side of the second cylinder.

In one possible embodiment, the positive cover plate assembly 300 further includes an isolation and positioning structure 360, the isolation and positioning structure 360 is sleeved on the positive terminal 310, and the isolation and positioning structure 360 is located between the positive adapter plate 320 and the positive cover plate 330.

In this embodiment, the specific configuration of the positive cover plate assembly 300 is optimized. Specifically, the positive cover plate assembly 300 is configured as a combined component that at least includes the positive terminal 310, the positive adapter plate 320, the positive cover plate 330, and the isolation and positioning structure 360, where the isolation and positioning structure 360 is configured to improve the alignment accuracy between the positive cover plate 330 and the positive adapter plate 320. For example, but not limited to, the isolation and positioning structure 360 is an isolation and positioning ring.

In one example, the material of the isolation and positioning structure 360 is PPS (polyphenylene sulfide).

In one example, the positive terminal 310 includes a first cylinder, a second cylinder, and a third cylinder that are coaxially arranged, and the isolation and positioning structure 360 is sleeved on an outer side of the second cylinder.

In one example, the positive cover plate assembly 300 further includes a sealing structure 350. The sealing structure 350 is sleeved on the outer side of the second cylinder, and the isolation and positioning structure 360 is sleeved on the outer side of the sealing structure 350.

In one example, a second inlet, an annular outlet, a strip-shaped inlet, and a second outlet are provided on the isolation and positioning structure 360, and a second electrolyte channel 303 is provided among the positive cover plate 330, the positive adapter plate 320, and the isolation and positioning structure 360.

In one possible embodiment, the positive cover plate assembly 300 further includes a positive electrode plate provided between the positive adapter plate 320 and the battery cell. A first avoidance hole is provided on the positive electrode plate. The isolation and positioning structure is provided with an annular channel portion 61, a strip-shaped channel portion 63, a first connecting portion 64, a first connecting boss 66, a groove 67, and a second connecting boss 68. The annular channel portion 61 and the first connecting portion 64 are coaxially arranged, and the strip-shaped channel portion 63 is provided between the annular channel portion 61 and the first connecting portion 64. The first connecting boss 66 and the groove 67 are arranged at intervals on a same side of the strip-shaped channel portion 63. The second connecting boss 68 corresponds to the groove 67 and is provided on the other side of the strip-shaped channel portion 63. Both the groove 67 and the second connecting boss 68 are communicated with the strip-shaped channel portion 63. The positive cover plate 330 is provided with a first boss connecting hole and an electrolyte injection hole. The first connecting boss 66 is embedded in the first boss connecting hole, and the electrolyte injection hole is aligned with the groove 67. The positive adapter plate 320 is provided with a blind hole 53, a through hole 54, a first flow channel 55, a second flow channel 56, and a plurality of first flanges 57. The blind hole 53 and the through hole 54 are communicated via the first flow channel 55. The second flow channel 56 is communicated with the blind hole and/or the through hole and an edge of the positive adapter plate. The plurality of first flanges 57 are arranged at intervals around a periphery of the positive adapter plate 320. The second connecting boss 68 is embedded in the blind hole 53. The positive electrode plate is provided with an avoidance hole and a plurality of second flanges. The avoidance hole and the through hole in the positive adapter plate 320 are arranged opposite each other. The plurality of second flanges are arranged at intervals around the periphery of the positive electrode plate, and the second flange is embedded between the two adjacent first flanges 57.

Thus, the electrolyte injection hole, the groove 67, the strip-shaped channel portion, the through hole of the second connecting boss, the blind hole, the first flow channel 55, the through hole, and the first avoidance hole are communicated to form a first electrolyte flow channel. The strip-shaped channel portion, or the annular channel portion and the strip-shaped channel portion are communicated to form a second electrolyte flow channel; and the blind hole and the second flow channel 56 are communicated, or, the blind hole, the through hole, and the second flow channel 56 are communicated to form a second electrolyte flow channel.

The present disclosure further provides a lithium-ion battery, and the lithium-ion battery includes: a case 100, a battery cell 200, a positive cover plate assembly 300, a positive adapter plate 320, and a negative cover plate assembly 400.

The case 100 has a first opening and a second opening arranged opposite each other.
the battery cell 200 is provided within the case 100;
the positive cover plate assembly 300 is mounted over the first opening of the case 100;
the positive adapter plate 320 as described above is connected to the positive cover plate assembly 300 and the battery cell 200, and is located within the case 100; and
the negative cover plate assembly 400 is mounted over the second opening of the case 100.

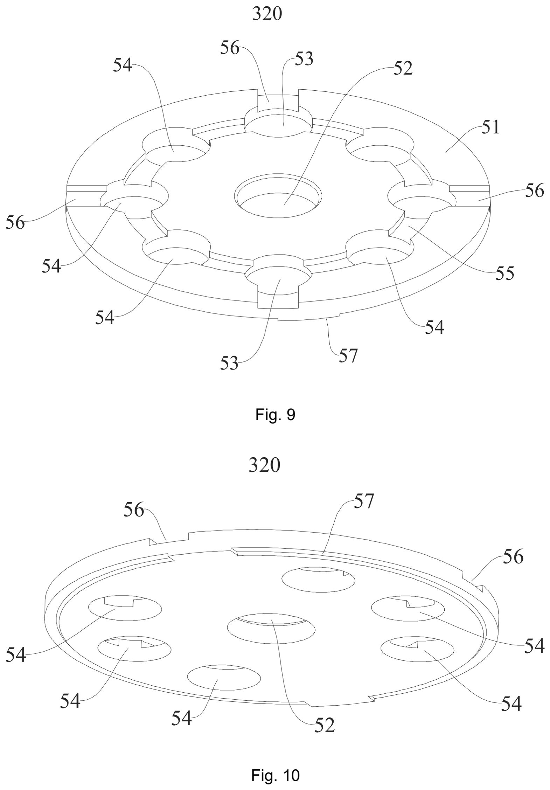

Referring to FIG. 9 and FIG. 10, in one possible embodiment, the positive adapter plate 320 includes an adapter plate body 51 and a first flow channel 55 provided on the adapter plate body 51. The adapter plate body 51 is provided with a first connecting hole 52, a blind hole 53, and a through hole 54. The first connecting hole 52 is configured to be sleeved on a positive terminal of the positive cover plate assembly 300. The blind hole 53 and the through hole 54 are arranged at intervals on an outer peripheral side of the first connecting hole 52. The blind hole 53 and the through hole 54 are communicated through the first flow channel 55. The blind hole 53 is configured to connect the positive cover plate assembly 300, and the through hole 54 is configured to align with an internal roll of the battery cell 200.

In this embodiment, the specific configuration of the positive adapter plate 320 is optimized to reduce a flow rate of the electrolyte entering the roll of the battery cell 200, thereby decreasing the damage/wear to the roll of the battery cell 200 caused by high electrolyte flow rate and the resulting strong impact/collision force on the roll of the battery cell 200, and enhancing the yield of the lithium-ion battery.

Specifically, the positive adapter plate 320 is configured as a composite structure including at least the adapter plate body 51 and the first flow channel 55. The adapter plate body 51 is provided with the first connecting hole 52, the blind hole 53, and the through hole 54. The first connecting hole 52 is configured to be sleeved on the positive terminal to connect and fasten the positive adapter plate 320 and the positive cover plate assembly 300. The blind hole 53 is configured to buffer the flow rate of the electrolyte guided from the positive cover plate assembly 300. The through hole 54 is configured to guide the electrolyte flowing into the positive adapter plate 320 into the roll of the battery cell 200. The first flow channel 55 is configured to communicate with the blind hole 53 and the through hole 54, thereby enabling internal flow of the electrolyte within the adapter plate body 51.

As described above, the flow path of the electrolyte on the adapter plate body 51 is as follows: the electrolyte flowing from the positive cover plate assembly 300 enters the blind hole 53, then enters the through hole 54 by the first flow channel 55, and finally enters the internal roll of the battery cell 200 by the through hole 54.

In one example, a diameter of the through hole 54 is slightly larger than a diameter of the blind hole 53, and a width of the first flow channel 55 is less than or equal to a diameter of the through hole 54/blind hole 53. For example, but not limited to, the first flow channel 55 is an arc-shaped groove provided in the adapter plate body 51.

Referring to FIG. 9 and FIG. 10, in one possible embodiment, the positive adapter plate 320 further includes a second flow channel 56 in the adapter plate body 51. The second flow channel 56 is configured to communicate with the through hole 54 or the blind hole 53, and a periphery of the adapter plate body 51.

In this embodiment, the specific configuration of the positive adapter plate 320 is further optimized. Specifically, the positive adapter plate 320 is configured as a composite structure including at least the adapter plate body 51, the first flow channel 55, and the second flow channel 56. The through hole 54 or the blind hole 53 and the periphery of the adapter plate body 51 are communicated through the second flow channel 56. Thus, the electrolyte in the through hole 54 or the blind hole 53 can be guided into the periphery of the adapter plate body 51, or the electrolyte at the periphery of the adapter plate body 51 can be guided into the through hole 54 or the blind hole 53.

As described above, the flow path of the electrolyte on the adapter plate body 51 is as follows: the electrolyte flowing from the positive cover plate assembly 300 enters the blind hole 53, then enters the through hole 54 via the first flow channel 55; and subsequently, part of the electrolyte enters the internal roll of the battery cell 200 through the through hole 54, while the other part of the electrolyte enters the gap between the case 100 of the lithium-ion battery and the battery cell 200 through the second flow channel 56. When the internal roll of the battery cell 200 dries up, the electrolyte in the gap between the case 100 of the lithium-ion battery and the battery cell 200 enters the through hole 54 via the second flow channel 56, and finally enters the internal roll.

In one example, a width of the second flow channel 56 is less than or equal to the diameter of the through hole 54/blind hole 53. For example, but not limited to, the first flow channel 55 is a strip-shaped groove provided in the adapter plate body 51.

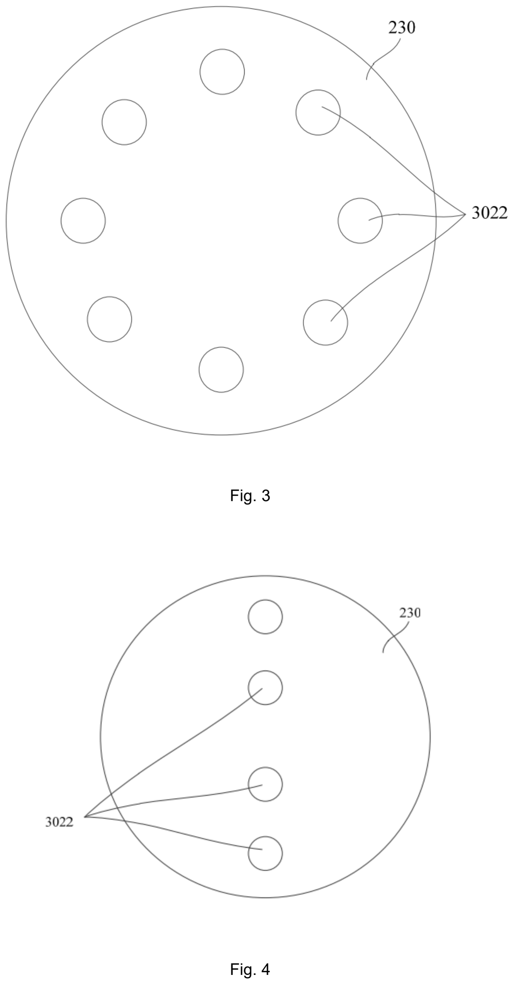

Referring to FIG. 3 and FIG. 4, in one possible embodiment, there are a plurality of through holes 54, and projections of the plurality of through holes 54 in the axial direction Y of the first connecting hole 52 are all located within the projection of the internal roll of the battery cell 200 in the axial direction Y of the first connecting hole 52.

In this embodiment, the specific configuration of the adapter plate body 51 is optimized. Specifically, to improve the conduction efficiency of the electrolyte on the adapter plate body 51, a plurality of through holes 54 are provided in the adapter plate body 51. Each through hole 54 is aligned with the internal roll of the battery cell 200, and the projection of the each through hole 54 in the axial direction Y of the first connecting hole 52 is located within the projection of the internal roll of the battery cell 200 in the axial direction Y of the first connecting hole 52. On one hand, the plurality of through holes 54 are configured, so that the electrolyte flowing out of the adapter plate body 51 is shunted, effectively alleviating the accumulation and blockage of the electrolyte within the adapter plate body 51, and improving the smoothness and efficiency of electrolyte injection. On the other hand, the plurality of through holes 54 are distributed at intervals and aligned with different positions of the internal roll of the battery cell 200, so that the electrolyte is injected into and wets different positions of the internal roll of the battery cell 200, improving the uniformity of electrolyte injection into the internal roll, and ensuring that the electrolyte is evenly distributed within the internal roll. This is conducive to enhancing the stability and safety of the charge and discharge of the lithium-ion battery.

Referring to FIG. 9 and FIG. 10, in one possible embodiment, the plurality of through holes 54 are distributed at intervals along the circumferential direction of the first connecting hole 52.

In this embodiment, the specific configuration of the adapter plate body 51 is further optimized to improve the injection efficiency. Specifically, the plurality of through holes 54 are arranged at intervals along the circumferential direction of the first connecting hole 52. In this case, the projections of the plurality of through holes 54 in the axial direction Y of the first connecting hole 52 are circular. Since the electrolyte is injected along the circumferential direction of the internal roll of the battery cell 200, only very little or almost no electrolyte flows along the roll direction of the internal roll. Most of the electrolyte flows directly along the axial direction Y of the internal roll, thereby shortening the flow path of the electrolyte and effectively improving the injection efficiency and stability of the lithium-ion battery.

Referring to FIG. 9 and FIG. 10, in one possible embodiment, the plurality of through holes 54 are distributed at intervals along the radial direction X of the first connecting hole 52.

In this embodiment, the specific configuration of the adapter plate body 51 is further optimized to improve the injection efficiency. Specifically, the plurality of through holes 54 are arranged at intervals along the radial direction X of the first connecting hole 52. In this case, the projections of the plurality of through holes 54 in the axial direction Y of the first connecting hole 52 are linear. Since the electrolyte is injected along at least one diameter direction of the internal roll of the battery cell 200, part of the electrolyte flows along the roll direction of the internal roll to wet the internal roll into which no electrolyte has been injected, while the other part of the electrolyte flows along the axial direction Y of the internal roll. Thus, the simple arrangement of the plurality of through holes 54 effectively reduces the processing difficulty of the adapter plate body 51.

In one example, the plurality of through holes 54 may also be arranged simultaneously along both the circumferential direction and radial direction X of the first connecting hole 52. **In** this case, the projections of the plurality of through holes 54 in the axial direction Y of the first connecting hole 52 are of a multi-layer concentric circle structure.

Referring to FIG. 9 and FIG. 10, in one possible embodiment, there are a plurality of first flow channels 55, where one of the first flow channels 55 is configured to communicate with the two adjacent through holes 54, or one of the first flow channels 55 is configured to communicate with one through hole 54 and the blind hole 53 adjacent to the through hole 54.

In this embodiment, the specific configuration of the first flow channel 55 is further optimized. Specifically, to simplify the configuration of the positive adapter plate 320 and reduce the processing difficulty, a plurality of first flow channels 55 are provided, and are connected end-to-end via the through holes 54/blind holes 53.

In one example, a plurality of through holes 54 and a plurality of blind holes 53 are provided and staggered, and projections of the plurality of through holes 54 and the plurality of blind holes 53 in the axial direction Y of the first connecting hole 52 are circular. In this case, the plurality of first flow channels 55 are arc-shaped flow channels and are connected end-to-end to enclose a circle.

Referring to FIG. 9 and FIG. 10, in one possible embodiment, there are a plurality of second flow channels 56. The through holes 54 and the periphery of the adapter plate body 51 are communicated by the second flow channels 56, or the blind holes 53 and the periphery of the adapter plate body 51 are communicated by the second flow channels 56.

In this embodiment, the specific configuration of the second flow channel 56 is further optimized. Specifically, to improve the shunting uniformity of the electrolyte, a plurality of second flow channels 56 are provided. The number of the second flow channels 56 is less than or equal to the total number of through holes 54 and blind holes 53. One second flow channel 56 corresponds to at least one through hole 54/blind hole 53.

As described above, the flow path of the electrolyte on the adapter plate body 51 is as follows: the electrolyte flowing from the positive cover plate assembly 300 enters the blind hole 53; then, part of the electrolyte enters the through hole 54 via the first flow channel 55, while the other part of the electrolyte enters the gap between the case 100 of the lithium-ion battery and the battery cell 200 via the second flow channel 56 communicated with the blind hole 53; and finally, the part of the electrolyte enters the internal roll of the battery cell 200 via the through hole 54, and the other part of the electrolyte enters the gap between the case 100 of the lithium-ion battery and the battery cell 200 via the second flow channel 56 communicated with the through hole 54. When the internal roll of the battery cell 200 dries up, the electrolyte in the gap between the case 100 of the lithium-ion battery and the battery cell 200 enters the through hole 54/blind hole 53 via the second flow channel 56, and finally enters the internal roll.

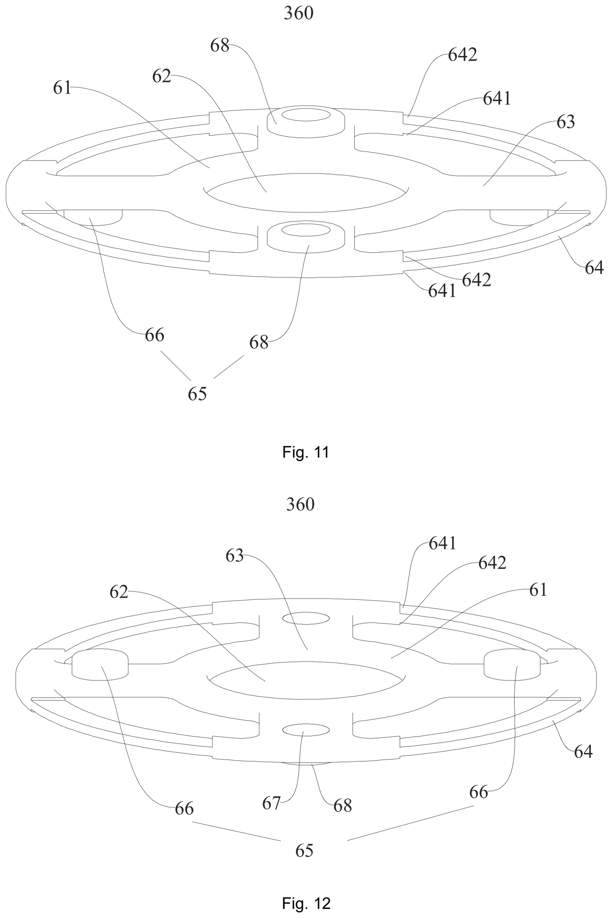

Referring to FIG. 11 and FIG. 12, an embodiment of the present disclosure provides an isolation and positioning structure that includes an annular channel portion 61, a strip-shaped channel portion 63, a first connecting portion 64, and a second connecting portion 65.

The annular channel portion 61 is provided with a first connecting hole 62 that is configured to be sleeved on the positive terminal 310;
the strip-shaped channel portion 63 is communicated with the annular channel portion 61 and extends in the radial direction X of the annular channel portion 61;
the first connecting portion 64 is connected to a side of the strip-shaped channel portion 63 away from the annular channel portion 61; and the first connecting portion 64 and the case 100 of the lithium-ion battery are arranged at intervals; and
the second connecting portion 65 is provided on the annular channel portion 61 or the strip-shaped channel portion 63, and the second connecting portion 65 extends in the axial direction Y of the first connecting hole 62.

In this embodiment, the specific structure of the isolation and positioning structure 360 is optimized to shorten an alignment time between components of the positive cover plate assembly 300 and improve the assembly efficiency of the positive cover plate assembly 300.

Specifically, the isolation and positioning structure 360 is configured as a combination assembly including at least the annular channel portion 61, the strip-shaped channel portion 63, the first connecting portion 64, and the second connecting portion 65. The annular channel portion 61 and the strip-shaped channel portion 63 are used for electrolyte flow. On one hand, the first connecting portion 64 is configured to connect a free end of the strip-shaped channel portion 63 to enhance rigidity of the strip-shaped channel portion 63; on the other hand, the first connecting portion is configured to communicate with the electrolyte channel between the isolation and positioning structure 360 and the case 100 of the lithium-ion battery, thereby achieving the radial flow of the electrolyte in the isolation and positioning structure 360. The second connecting portion 65 is configured to connect components such as the positive cover plate 330 and the positive adapter plate 320 of the positive cover plate assembly 300, improving the alignment accuracy of the isolation and positioning structure 360, and enhancing the assembly efficiency of the positive cover plate assembly 300.

In one example, the isolation and positioning structure 360 is made of PPS material and is configured to isolate the positive cover plate 330 and the positive adapter plate 320.

Referring to FIG. 11 and FIG. 12, in one possible embodiment, the positive cover plate 330 is provided with a second connecting hole and an electrolyte injection hole at intervals. The second connecting portion 65 includes a first connecting boss 66 and a groove 67 that are provided on a same side. The groove 67 is provided with a first through hole (not shown in the figure) communicating with the strip-shaped channel portion 63. The first connecting boss 66 is embedded in the second connecting hole, and the first through hole is aligned with the electrolyte injection hole, to connect and fasten the isolation and positioning structure 360 and the positive cover plate 330.

In this embodiment, the specific configuration of the second connecting portion 65 is optimized. Specifically, the second connecting portion 65 is configured as a composite structure including at least the first connecting boss 66 and the groove 67 that are provided on the same side. The first connecting boss 66 is embedded in the second connecting hole of the positive cover plate 330 to prevent the isolation and positioning structure 360 from left and right rotation, misalignment, or shifting during assembly. The first through hole provided in the groove 67 is configured to connect the strip-shaped channel portion 63 and the electrolyte injection hole, thereby guiding the electrolyte into the isolation and positioning structure 360.

In one example, the first connecting boss 66 is provided on the annular channel portion 61, and one or more first connecting bosses 66 may be provided. Of course, in other embodiments, the first connecting boss 66 may also be provided on the strip-shaped channel portion 63. The configuration position thereof is not limited as long as the first connecting boss is aligned with the second connecting hole in the positive cover plate 330.

In one example, the groove 67 is provided in the annular channel portion 61, and one or more grooves 67 may be provided. Of course, in other embodiments, the groove 67 may also be provided on the strip-shaped channel portion 63. The configuration position thereof is not limited as long as the groove is aligned with the electrolyte injection hole in the positive cover plate 330.

Referring to FIG. 11 and FIG. 12, in one possible embodiment, the positive adapter plate 320 is provided with a liquid flow channel. The second connecting portion 65 further includes a second connecting boss 68 arranged opposite to the first connecting boss 66. The second connecting boss 68 is provided with a second through hole communicating with the strip-shaped channel portion 63. The second connecting boss 68 is embedded in the liquid flow channel, to connect and fasten the isolation and positioning structure 360 and the positive adapter plate 320.

In this embodiment, the specific configuration of the second connecting portion 65 is further optimized. Specifically, the second connecting portion 65 is configured as a composite structure including at least the first connecting boss 66, the groove 67, and the second connecting boss 68. On one hand, the second connecting boss 68 is embedded in the liquid flow channel of the positive adapter plate 320 to prevent the isolation and positioning structure 360 from left and right rotation, misalignment, or shifting during assembly. On the other hand, the second through hole provided in the second connecting boss 68 is configured to connect the strip-shaped channel portion 63 and the liquid flow channel, thereby guiding the electrolyte into the positive adapter plate 320.

In one example, the second connecting boss 68 is provided on the annular channel portion 61, and one or more second connecting bosses 68 may be provided. Of course, in other embodiments, the second connecting boss 68 may also be provided on the strip-shaped channel portion 63. The configuration position thereof is not limited as long as the second connecting boss is aligned with the liquid flow channel of the positive adapter plate 320.

Referring to FIG. 11 and FIG. 12, in one possible embodiment, the first connecting portion 64 is provided with a first notch 641. The first notch 641 extends in the axial direction Y of the first connecting hole 62 and is configured to enclose a first channel together with the positive cover plate 330.

In this embodiment, the specific configuration of the first connecting portion 64 is optimized. Specifically, to improve the electrolyte flow guiding efficiency of the strip-shaped channel portion 63, the first notch 641 is provided in the first connecting portion 64. Both ends of the first notch 641 are communicated with the strip-shaped channel portion 63. An outer side of the first notch 641 is communicated with the gap/electrolyte channel between the case 100 of the lithium-ion battery and the isolation and positioning structure 360. An inner side of the first notch 641, the strip-shaped channel portion 63 and the annular channel portion 61 enclose the avoidance hole. After the isolation and positioning structure 360 and the positive cover plate 330 are assembled, a top surface of the first notch 641 abuts against the positive cover plate 330, and encloses a first channel with an arc-shaped opening together with the positive cover plate 330. Thus, the electrolyte flowing out of the strip-shaped channel portion 63 enters the first channel through both ends of the first notch 641, and then can flow out from both inner and outer sides of the first channel, thereby enlarging the outflow caliber for the electrolyte. Or, the electrolyte flows into the first channel from both the inner and outer sides of the first channel, and enters the strip-shaped channel portion 63 from both ends of the first channel, thereby enlarging the inflow caliber for the electrolyte.

In one example, the first connecting portion 64 is an arc-shaped connecting portion, the first notch 641 is an arc-shaped notch, and the first channel is an arc-shaped channel.

Referring to FIG. 11 and FIG. 12, in one possible embodiment, the first connecting portion 64 is further provided with a second notch 642 opposite to the first notch 641. The second notch 642 and the first notch 641 are arranged at intervals along the axial direction Y of the first connecting hole 62. The second notch 642 is configured to enclose a second channel together with the positive adapter plate 320.

In this embodiment, the specific configuration of the first connecting portion 64 is further optimized. Specifically, to improve the electrolyte flow guiding efficiency of the strip-shaped channel portion 63, the first connecting portion 64 is provided with a first notch 641 and a second notch 642. Both ends of the second notch 642 are communicated with the strip-shaped channel portion 63. An outer side of the second notch 642 is communicated with the gap/electrolyte channel between the case 100 of the lithium-ion battery and the isolation and positioning structure 360; and an inner side of the second notch 642, together with the strip-shaped channel portion 63 and the annular channel portion 61, encloses an avoidance hole. After the isolation and positioning structure 360 and the positive adapter plate 320 are assembled, a bottom surface of the second notch 642 abuts against the positive adapter plate 320, and encloses a second channel with an arc-shaped opening together with the positive adapter plate 320. Thus, the electrolyte flowing out of the strip-shaped channel portion 63 enters the second channel through both ends of the second notch 642, and then can flow out from both inner and outer sides of the second channel, thereby enlarging the outflow caliber for the electrolyte. Or, the electrolyte flows into the second channel from both the inner and outer sides of the second channel, and enters the strip-shaped channel portion 63 from both ends of the second channel, thereby enlarging the inflow caliber for the electrolyte.

In one example, the second connecting portion 65 is an arc-shaped connecting portion, the second notch 642 is an arc-shaped notch, and the second channel is an arc-shaped channel.

Referring to FIG. 11 and FIG. 12, in one possible embodiment, a plurality of strip-shaped channel portions 63 are provided, and the plurality of strip-shaped channel portions 63 are arranged at intervals along the circumferential direction of the annular channel portion 61. A plurality of first connecting portions 64 are provided, and one of the first connecting portions 64 is connected between the two adjacent strip-shaped channel portions 63.

In this embodiment, the specific configurations of the strip-shaped channel portion 63 and the first connecting portion 64 are optimized. Specifically, to prevent accumulation and blockage of the electrolyte in the annular channel portion 61, and the plurality of strip-shaped channel portions 63 are provided for guiding/conducting the electrolyte. Meanwhile, to improve rigidity support between the plurality of strip-shaped channel portions 63, the plurality of first connecting portions 64 are provided for connection.

In one example, the plurality of first connecting portions 64 may be provided on a same circumference and enclose a circle. In other embodiments, the plurality of first connecting portions 64 may also be provided on different circumferences, and the plurality of first connecting portions 64 are staggered along the radial direction X of the first connecting hole 62.

In one example, four strip-shaped channel portions 63 are provided in a cross pattern; and four first connecting portions 64 are respectively provided between every two adjacent strip-shaped channel portions 63. The avoidance hole formed by the inner side of the first connecting portion 64 together with the two adjacent strip-shaped channel portions 63 and the annular channel portion 61 is a sector-shaped through hole.

Referring to FIG. 11 and FIG. 12, in one possible embodiment, the plurality of first connecting portions 64 enclose a ring-shaped structure, and the ring-shaped structure and the annular channel portion 61 are coaxially arranged.

In this embodiment, the specific configurations of the strip-shaped channel portion 63 and the first connecting portion 64 are further optimized. Specifically, for ease of processing, the plurality of first connecting portions 64 is arranged on the same circumference to form a ring-shaped structure, and the ring-shaped structure shares the same center and axis as the annular channel portion 61.

In one possible embodiment, the annular channel portion 61 and the strip-shaped channel portion 63 are integrally formed.

In this embodiment, for ease of processing, reduction of assembly time, and improvement of assembly efficiency, the annular channel portion 61 and the strip-shaped channel portion 63 are integrally formed. Of course, in other embodiments, the annular channel portion 61 and the strip-shaped channel portion 63 may also be separately processed and then connected together by laser welding or other connection methods.

It should be noted that the annular channel portion 61 forms the aforementioned annular channel 3031, the strip-shaped channel portion 63 forms the strip-shaped channel 3032, and arc-shaped channels 3033 are provided on both sides of the isolation and positioning structure 360 along the Y direction. The first notch 641 and the second notch 642 respectively form the arc-shaped channels 3033 on both sides of the isolation and positioning structure 360 along the Y axis.

In one possible embodiment, the negative cover plate assembly 400 includes a negative terminal 410, a negative adapter plate 420, and a negative cover plate 430. The negative terminal 410 is electrically connected to the negative tab 220, and both the negative adapter plate 420 and the negative cover plate 430 are sleeved on the negative terminal 410. The negative cover plate 430 is provided on a side of the negative adapter plate 420 away from the negative tab 220, and the negative adapter plate 420 is connected to the negative tab 220.

In this embodiment, the specific configuration of the negative cover plate assembly 400 is optimized. Specifically, the negative cover plate assembly 400 is configured as a combination assembly including at least the negative terminal 410, the negative adapter plate 420, and the negative cover plate 430. The negative terminal 410 conducts electricity to the negative tab 220 of the battery cell 200, the negative adapter plate 420 is sleeved on the negative terminal 410 and is connected to the negative tab 220, the negative cover plate 430 is sleeved on the negative terminal 410 and is connected to a side of the negative adapter plate 420 away from the negative tab 220, and is connected to the second opening of the case 100. Thus, part of the negative terminal 410 and the entire negative adapter plate 420 are sealed and pre-embedded within the case 100.

In one example, a third electrolyte channel 401 is provided between the negative adapter plate 420 and the negative cover plate 430.

In one example, a third connecting boss is provided on the negative cover plate 430. The negative adapter plate 420 is provided with a third connecting hole 73, a second avoidance hole 74, a first groove 75, and a second groove 76. The third connecting protrusion is embedded in the third connecting hole 73. The first groove 75 is configured to connect the periphery of the negative adapter plate 420 and the second avoidance hole 74, and the second groove 76 is communicated with the periphery of the negative adapter plate 420 and the third connecting hole 73. Thus, the second groove 76 is communicated with the third connecting hole 73, or the first groove 75 is communicated with the second avoidance hole 74 to form a third electrolyte flow channel.

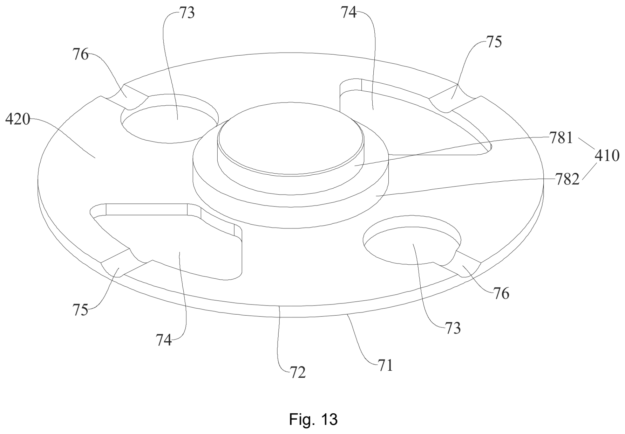

Referring to FIG. 13, an embodiment of the present disclosure provides a negative adapter structure that includes: a negative adapter plate 420 and a negative terminal 410. The negative adapter plate 420 has a first surface 71 and a second surface 72 arranged opposite each other. The first surface 71 is a flat surface and faces the battery cell 200; and the negative terminal 410 protrudes from the second surface 72 of the negative adapter plate 420 and is configured to connect the negative cover plate 430.

In this embodiment, the specific configuration of the negative adapter structure is optimized, so that no flow guiding grooves are provided on a side of the negative adapter structure facing the battery cell 200, greatly improving the heat transfer efficiency and electrical conductivity of the negative adapter structure.

Specifically, the negative adapter structure is configured to a combination assembly including at least the negative adapter plate 420 and the negative terminal 410. The negative terminal 410 protrudes from the negative adapter plate 420. The first surface 71 of the negative adapter plate 420 faces the battery cell 200, and the second surface 72 faces the negative cover plate 430. Since the first surface 71 of the negative adapter plate 420 is flat and no flow grooves are provided thereon, the heat transfer efficiency and electrical conductivity of the negative adapter structure are not diminished by the flow grooves, thereby improving the heat transfer efficiency and electrical conductivity of the negative adapter structure. Meanwhile, the negative cover plate 430 is connected through the negative terminal 410, which improves tightness of connection between the negative cover plate 430 and the negative adapter plate 420 and enhances the stability and safety of a negative terminal of the lithium-ion battery.

In one example, the negative adapter plate 420 is of a disk-shaped structure, and the negative terminal 410 is a cylindrical boss.

In one possible embodiment, the negative cover plate 430 is provided with a connecting protrusion, the negative adapter plate 420 is provided with a third connecting hole 73, and the connecting protrusion is fitted into the third connecting hole 73 to connect and fasten the negative cover plate 430 and the negative adapter plate 420.

In this embodiment, the specific configuration of the negative adapter plate 420 is optimized to improve tightness of connection between the negative cover plate 430 and the negative adapter plate 420. Specifically, a connecting protrusion is provided on the negative cover plate 430, and the third connecting hole 73 is provided on the negative adapter plate 420. The negative adapter plate 420 is connected and fastened to the negative cover plate 430 through the third connecting hole 73.

In another example, the negative cover plate 430 is provided with the third connecting hole 73, the negative adapter plate 420 is provided with the connecting protrusion, and the negative adapter plate 420 is connected and fastened to the negative cover plate 430 through the connecting protrusion.

In one possible embodiment, the negative adapter plate 420 is further provided with a second avoidance hole 74 and a first groove 75, and the periphery of the negative adapter plate 420 and the second avoidance hole 74 are communicated by the first groove 75.

In this embodiment, the specific configuration of the negative adapter plate 420 is further optimized. Specifically, the negative adapter plate 420 is configured as a composite component including at least the third connecting hole 73, the second avoidance hole 74, and the first groove 75. The second avoidance hole 74 and the third connecting hole 73 are arranged at intervals along the circumferential direction of the negative terminal 410; and the first groove 75 is connected to the outer side of the second avoidance hole 74 to communicate with the second avoidance hole 74 and the periphery of the negative adapter plate 420.

Thus, the electrolyte flowing into the negative adapter structure from the battery cell 200 can be guided through the second avoidance hole 74 and the first groove 75 into the gap between the negative adapter structure and the case 100 of the lithium-ion battery for storage. When the internal roll of the battery cell 200 becomes dry and lacks the electrolyte, the electrolyte stored in the gap between the negative adapter structure and the case 100 can sequentially flow through the first groove 75 and the second avoidance hole 74 into the internal roll of the battery cell 200, thereby wetting the roll of the battery cell 200.

It should be understood that the first groove 75 is provided in the second surface 72.

In one possible embodiment, the negative adapter plate 420 is further provided with the second groove 76 that is communicated with the periphery of the negative adapter plate 420 and the third connecting hole 73.

In this embodiment, the specific configuration of the negative adapter plate 420 is further optimized. Specifically, the negative adapter plate 420 is configured as a composite component including at least the third connecting hole 73, the second avoidance hole 74, the first groove 75, and the second groove 76. The second groove 76 is connected to an outer side of the third connecting hole 73 to communicate with the third connecting hole 73 and the periphery of the negative adapter plate 420.

Thus, the electrolyte flowing into the negative adapter structure from the battery cell 200 can be guided through the third connecting hole 73 and the second groove 76 into the gap between the negative adapter structure and the case 100 of the lithium-ion battery for storage. When the internal roll of the battery cell 200 becomes dry and lacks the electrolyte, the electrolyte stored in the gap between the negative adapter structure and the case 100 can sequentially flow through the second groove 76 and the third connecting hole 73 into the internal roll of the battery cell 200, thereby wetting the roll of the battery cell 200.

It should be understood that the second groove 76 is provided in the second surface 72.

In one possible embodiment, the second avoidance hole 74 may be any of the following shapes: circular, elliptical, sector-shaped, square, rectangular, rhombic, or irregularly polygonal.

In this embodiment, the specific shape of the second avoidance hole 74 is optimized. **It** should be understood that the shape of the second avoidance hole 74 is not limited to be circular, elliptical, sector-shaped, square, rectangular, rhombic, or irregularly polygonal.

In one example, the second avoidance hole 74 is sector-shaped, and the third connecting hole 73 is circular.

In one possible embodiment, a plurality of third connecting holes 73 and a plurality of second grooves 76 are provided, and one of the third connecting holes 73 corresponds to at least one of the second grooves 76. A plurality of second avoidance holes 74 and a plurality of first grooves 75 are provided, one of the plurality of second avoidance holes 74 corresponds to at least one of the first grooves 75, and the third connecting holes 73 and the second avoidance holes 74 are staggered.

In this embodiment, the specific configuration of the negative adapter plate 420 is further optimized. Specifically, the plurality of third connecting holes 73, the plurality of second grooves 76, the plurality of second avoidance holes 74, and the plurality of first grooves 75 are provided in the negative adapter plate 420 to improve flow of the electrolyte at the negative terminal.

In one example, two third connecting holes 73, two second grooves 76, two second avoidance holes 74, and two first grooves 75 are provided. The two third connecting holes 73 are arranged on opposite sides of the negative terminal 410, the two second avoidance holes 74 are arranged on opposite sides of the negative terminal 410, and one of the third connecting holes 73 and one of the second avoidance holes 74 are staggered along the circumferential direction of the negative terminal 410. One of the third connecting holes 73 corresponds to one of the second grooves 76, and one of the second avoidance holes 74 corresponds to one of the first grooves 75.

Of course, in other embodiments, one of the third connecting holes 73 may also correspond to two or more second grooves 76, and one of the second avoidance holes 74 may also correspond to two or more first grooves 75.

In one possible embodiment, the negative cover plate 430 is provided with the connecting through hole, the negative terminal 410 includes a first boss 781 and a second boss 782, the first boss 781 is provided on the negative adapter plate 420, the second boss 782 is provided on a side of the first boss 781 away from the negative adapter plate 420, and the negative cover plate 430 is connected to the first boss 781 via the connecting through hole.

In this embodiment, the specific configuration of the negative terminal 410 is optimized. Specifically, the negative terminal 410 is configured as a combination assembly including at least the first boss 781 and the second boss 782. The negative cover plate 430 is sleeved on the first boss 781, and the second boss protrudes from the negative cover plate 430.

In one example, the second boss 782 and the first boss 781 are coaxially arranged, and a radial dimension of the second boss 782 is smaller than a radial dimension of the first boss 781, thereby forming a multilayer cylindrical boss structure.

In one possible embodiment, the third groove is further provided in the negative adapter plate 420, located in the first surface 71 and arranged opposite to the negative terminal 410.

In this embodiment, the specific configuration of the negative adapter plate 420 is further optimized. Specifically, the negative adapter plate 420 is configured as an assembly including at least the third groove, the third groove is provided in a second plane and configured to accommodate at least part of the central tube of the battery cell 200. Thus, the central tube is restricted from shaking, moving, or misaligning in the radial direction of the battery cell 200, thereby improving the assembly stability of the lithium-ion battery.

In one possible embodiment, the negative adapter plate 420 and the negative terminal 410 are integrally formed.

In this embodiment, to simplify the process and improve production efficiency, the negative connecting plate and the negative terminal 410 are integrally formed. Of course, in other embodiments, the negative adapter plate 420 and the negative terminal 410 may also be separately processed and then connected together by laser welding or other connection methods.

In one possible embodiment, the battery cell 200 includes a central tube 240 provided within the internal roll 230 of the battery cell 200, the central tube 240 includes a hollow tube body 241 and ball heads 242 embedded at both ends of the tube body 241, the ball heads 242 are provided with heat dissipation holes 2421, and the heat dissipation holes 2421 are communicated with an internal space of the case 100 and an internal space of the tube body 241.

In this embodiment, the specific configuration of the battery cell 200 is optimized. Specifically, the battery cell 200 is configured as a combination assembly including at least the internal roll 230 and the central tube 240, and the internal roll 230 includes positive and negative electrode rolls (positive electrode roll and negative electrode roll) and an insulating separator provided between the positive electrode roll and the negative electrode roll. After the internal roll 230 is wound into a roll, the roll is inserted into the central tube 240, thus assembling the battery cell 200. The tube body 241 of the central tube 240 is of a hollow structure to facilitate airflow circulation between the positive and negative electrodes; ends of the central tube 240 are provided with the ball heads 242, and the heat dissipation holes 2421 in the ball heads 242 are configured to allow airflow to pass through. For example, but not limited to, the ball heads 242 are of a hemispherical structure.

A gas channel can be reserved at a central position of the internal roll 230 by a central tube 240 winding technology as compared to a conventional needle winding technology, thereby enhancing gas circulation between the positive and negative ends of the battery and increasing effective heat dissipation at the center portion of the internal roll 230.

In one example, to enhance the toughness and insulation function of the central tube 240, PET (polyethylene terephthalate) material is selected for manufacturing the central tube 240.

It should be noted that, herein, relational terms such as first and second are used solely to distinguish one entity or operation from another, and do not necessarily require or imply any actual relationship or order between such entities or operations. Furthermore, terms "comprise", "include" or any other variations thereof are intended to cover a non-exclusive inclusion, so that a process, a method, a manufacture article, or a device that includes a series of elements not only includes those elements, but also includes other elements not explicitly listed, or includes elements inherent to such a process, method, manufacture article, or device. Unless otherwise limited, an element defined by the phrase "comprising a/an..." does not exclude the presence of additional identical elements in the process, method, article, or device that includes the stated element.

The foregoing descriptions are merely the specific embodiments of the present disclosure, enabling those skilled in the art to understand or implement the present disclosure. Various modifications to these embodiments will be apparent to those skilled in the art, and general principles defined herein may be applied to other embodiments without departing from the spirit or scope of the present disclosure. Therefore, the present disclosure is not to be limited to the embodiments shown herein, but is to be accorded the widest scope consistent with the principles and novel features disclosed herein.

## Claims

1. A lithium-ion battery, comprising:
a case (100) having a first opening and a second opening arranged opposite each other;
a battery cell (200) provided within the case (100), the battery cell (200) having a positive tab (210) located at the first opening and a negative tab (220) located at the second opening;
a positive cover plate assembly (300) that is fitted over the first opening and is electrically connected to the positive tab (210), wherein the positive cover plate assembly (300) is provided with an electrolyte injection port (301), a first electrolyte channel (302), and a second electrolyte channel (303), the first electrolyte channel (302) is communicated with the electrolyte injection port (301) and an internal roll (230) of the battery cell (200), and the second electrolyte channel (303) is communicated with the first electrolyte channel (302) and a gap between an outer wall of the battery cell (200) and the case (100); and
a negative cover plate assembly (400) that is fitted over the second opening and is electrically connected to the negative tab (220).

2. The lithium-ion battery according to claim 1, wherein the first electrolyte channel (302) comprises a first inlet (3021) and a plurality of first outlets (3022), the first inlet (3021) is communicated with the electrolyte injection port (301), the first outlets (3022) are aligned with the internal roll (230) of the battery cell (200), and projections of the plurality of first outlets (3022) in an axial direction of the battery cell (200) are all located within a projection of the internal roll (230) of the battery cell (200) in the axial direction of the battery cell (200).

3. The lithium-ion battery according to claim 2, wherein the plurality of first outlets (3022) are distributed at intervals along a circumference of the battery cell (200); and/or
the plurality of first outlets (3022) are distributed at intervals along a radial direction of the battery cell (200).

4. The lithium-ion battery according to claim 1, wherein the second electrolyte channel (303) comprises an annular channel (3031) and at least two strip-shaped channels (3032), the annular channel (3031) is coaxially arranged with the battery cell (200), the annular channel (3031) is communicated with the first electrolyte channel (302), the strip-shaped channels (3032) are communicated with the annular channel (3031) and the gap between the outer wall of the battery cell (200) and the case (100), the strip-shaped channels (3032) extend along a radial direction of the battery cell (200), and the at least two strip-shaped channels (3032) are arranged at intervals.

5. The lithium-ion battery according to claim 4, wherein the second electrolyte channel (303) further comprises an arc-shaped channel (3033), the arc-shaped channel (3033) is coaxially arranged with the battery cell (200), the arc-shaped channel (3033) is arranged at intervals an outer side of the annular channel (3031), an outer side of the arc-shaped channel (3033) is communicated with the gap between the outer wall of the battery cell (200) and the case (100), and both ends of the arc-shaped channel (3033) are communicated with the two adjacent strip-shaped channels (3032) respectively.

6. The lithium-ion battery according to any one of claims 1 to 5, wherein the negative cover plate assembly (400) is provided with a third electrolyte channel (401), and the internal roll (230) of the battery cell (200) and the gap between the outer wall of the battery cell (200) and the case (100) are communicated through the third electrolyte channel (401).

7. The lithium-ion battery according to any one of claims 1 to 5, wherein the positive cover plate assembly (300) comprises a positive terminal (310), a positive adapter plate (320), and a positive cover plate (330), the positive terminal (310) is electrically connected to the positive tab (210), the positive adapter plate (320) and the positive cover plate (330) are both sleeved on the positive terminal (310), the positive cover plate (330) is provided on a side of the positive adapter plate (320) away from the positive tab (210), and the positive adapter plate (320) is connected to the positive tab (210).

8. The lithium-ion battery according to claim 7, wherein the positive cover plate assembly (300) further comprises a positive terminal sleeve (340) and a sealing structure (350), the positive terminal sleeve (340) and the sealing structure (350) are both provided between the positive cover plate (330) and the positive terminal (310), and the sealing structure (350) is arranged facing the battery cell (200); and/or
the positive cover plate assembly (300) further comprises an isolation and positioning structure (360), the isolation and positioning structure (360) is sleeved on the positive terminal (310), and the isolation and positioning structure (360) is located between the positive adapter plate (320) and the positive cover plate (330).

9. The lithium-ion battery according to any one of claims 1 to 5, wherein the negative cover plate assembly (400) comprises a negative terminal (410), a negative adapter plate (420), and a negative cover plate (430), the negative terminal (410) is electrically connected to the negative tab (220), the negative adapter plate (420) and the negative cover plate (430) are both sleeved on the negative terminal (410), the negative cover plate (430) is provided on a side of the negative adapter plate (420) away from the negative tab (220), and the negative adapter plate (420) is connected to the negative tab (220).

10. The lithium-ion battery according to any one of claims 1 to 5, wherein the battery cell (200) comprises a central tube (240) provided in the internal roll (230) of the battery cell (200), the central tube (240) comprises a hollow tube body (241) and ball heads (242) embedded at both ends of the tube body (241), the ball heads (242) are provided with heat dissipation holes (2421), and the heat dissipation holes (2421) are communicated with an internal space of the case (100) and an internal space of the tube body (241).
